# FASCICULE DE BREVET EUROPEEN

(11) **EP 0 657 317 B1**
(45) Date de publication et mention de la délivrance du brevet: **22.01.1997**
(21) Numéro de dépôt: 94402517.0
(22) Date de dépôt: 07.11.1994
(51) Int. Cl.: B60K 15/04

(54) **Agencement pour le remplissage d'un réservoir de carburant de véhicule automobile**
Anordnung zum Betanken eines Fahrzeugkraftstoffbehälters
Arrangement for filling vehicle fuel tanks

(30) Priorité: 06.12.1993 FR 9314604
(43) Date de publication de la demande: 14.06.1995
(73) Titulaire: AUTOMOBILES PEUGEOT, 75116 Paris (FR); AUTOMOBILES CITROEN, 92200 Neuilly-sur-Seine (FR)
(72) Inventeur: Priet, Claude, F-25200 Montbeliard (FR)
(74) Mandataire: Polus, Camille

(56) Documents cités:
- FR-A- 2 588 806
- US-A- 4 653 660
- US-A- 4 712 709

## Description

La présente invention concerne un agencement pour le remplissage d'un réservoir de carburant de véhicule automobile.

Le réservoir est destiné à contenir un carburant adapté à la motorisation du véhicule, tel que du gazole, du carburant avec plomb ou du carburant sans plomb.

De façon classique, le réservoir de carburant est relié à un conduit de remplissage muni d'une extrémité délimitant une ouverture d'introduction d'un bec de pistolet de distribution de carburant.

Pour éviter de remplir le réservoir avec un carburant inadapté au véhicule, en particulier pour éviter d'introduire du carburant avec plomb dans un réservoir destiné à contenir du carburant sans plomb, il est connu d'utiliser les moyens détrompeurs suivants. D'une part, les pistolets de distribution de carburant sans plomb sont munis d'un bec de diamètre inférieur au diamètre du bec des pistolets de distribution de carburant avec plomb. D'autre part, l'extrémité du conduit de remplissage des réservoirs destinés à contenir du carburant sans plomb est munie d'un collet de calibration permettant l'introduction d'un bec de pistolet de distribution de carburant sans plomb, mais empêchant l'introduction d'un bec de diamètre supérieur à celui du collet, tel qu'un bec de pistolet de distribution de carburant avec plomb.

Il est connu d'obturer l'ouverture délimitée par le collet de calibration au moyen d'un volet articulé sollicité élastiquement vers sa position d'obturation. Pour des raisons d'encombrement, ce volet est généralement articulé dans sa partie inférieure de manière à se rabattre vers le bas de l'ouverture lorsqu'il est poussé par le bec du pistolet.

Or, habituellement, les pistolets de distribution de carburant sont munis dans leur partie inférieure d'un orifice de détection d'un trop-plein de carburant, relié à des moyens de coupure automatique d'alimentation en carburant du pistolet.

Le volet d'obturation du collet de calibration a donc pour inconvénient qu'il est susceptible d'obturer l'orifice de détection du trop-plein de carburant lorsque le bec est engagé dans le collet, au risque d'empêcher le fonctionnement des moyens de coupure automatique de l'alimentation en carburant.

L'invention a pour but de remédier à cet inconvénient avec des moyens simples et peu encombrants, agencés dans l'extrémité du conduit de remplissage du réservoir.

A cet effet l'invention a pour objet un agencement pour le remplissage d'un réservoir de carburant de véhicule automobile, du type comprenant un conduit de remplissage du réservoir muni d'un extrémité délimitant une ouverture d'introduction d'un bec de pistolet de distribution de carburant comportant dans sa partie inférieure un orifice de détection d'un trop-plein de carburant, et un volet d'obturation de l'ouverture d'introduction articulé dans sa partie inférieure en étant sollicité élastiquement vers sa position d'obturation, caractérisé en ce que le volet comporte deux parties articulées respectivement autour de deux axes coplanaires, sensiblement transversaux par rapport à l'extrémité du conduit, formant un angle entre eux, de manière qu'en position d'obturation du volet, les deux parties de celui-ci soient jointives, et qu'en position ouverte du volet, les parties de celui-ci soient écartées l'une de l'autre pour dégager l'orifice de détection d'un trop-plein de carburant.

Suivant d'autres caractéristiques de l'invention:
- l'ouverture d'introduction du bec de pistolet est délimitée par un collet de calibration empêchant l'introduction d'un bec de pistolet de diamètre supérieur à celui du collet ;
- le volet est sollicité vers sa position d'obturation par une épingle élastique en forme générale de U, les deux branches de l'épingle coopérant respectivement avec les deux parties du volet et étant enroulées autour de broches d'articulation de ces parties ;
- le volet a une forme générale circulaire lorsqu'il est en position d'obturation, les deux parties du volet étant délimitées sensiblement par le diamètre du volet bissecteur de l'angle formé par les axes d'articulation de ces parties.

Un exemple de réalisation de l'invention sera décrit ci-dessous en se référant aux dessins annexés dans lesquels :
- la figure 1 est une vue en perspective d'un agencement selon l'invention pour le remplissage d'un réservoir de carburant de véhicule automobile, dans lequel le volet est en position d'obturation ;
- la figure 2 est une vue de face de l'agencement de la figure 1 ;
- la figure 3 est une vue similaire à la figure 1, dans lequel le volet est dans une position ouverte d'introduction du bec de pistolet de distribution de carburant.

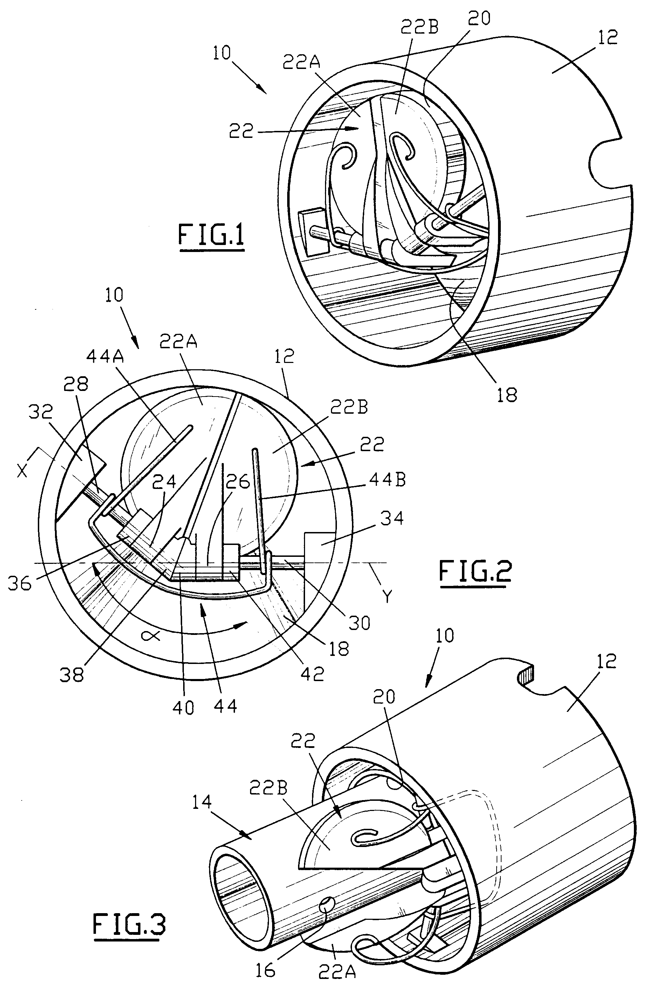

Sur les figures 1 à 3, on a représenté un agencement selon l'invention pour le remplissage d'un réservoir de carburant de véhicule automobile, désigné par la référence générale 10.

L'agencement 10 comporte un conduit de remplissage du réservoir (non représenté sur la figure) muni d'une extrémité 12 adaptée pour l'introduction d'un bec 14 de pistolet de distribution de carburant représenté uniquement à la figure 3.

De façon classique, le bec 14 comporte dans sa partie inférieure un orifice 16 de détection d'un trop-plein de carburant relié à des moyens de coupure automatique de l'alimentation en carburant du pistolet, connus en soi.

L'agencement 10 est adapté pour ne permettre l'utilisation que d'un pistolet de distribution de carburant sans plomb ayant un bec de diamètre inférieur à celui d'un bec de pistolet de distribution de carburant avec plomb.

A cet effet, l'agencement 10 comporte un organe évasé 18 formant collet de calibration disposé dans l'extrémité 12 du conduit de remplissage, délimitant une ouverture 20 d'introduction du bec 14 de pistolet. Le collet 18 empêche l'introduction d'un bec de pistolet de diamètre supérieur à celui du collet, tel qu'un bec de pistolet de distribution de carburant avec plomb.

L'ouverture 20 est obturée par un volet 22 articulé dans sa partie inférieure en étant sollicité élastiquement vers sa position d'obturation.

Le volet 22 comporte deux parties 22A,22B articulées respectivement autour de deux axes X,Y coplanaires sensiblement transversaux par rapport à l'extrémité 12 du conduit, formant un angle α entre eux.

En se référant aux figures 1 et 2, on voit que le volet 22 a une forme générale circulaire lorsqu'il est en position d'obturation, les deux parties 22A,22B du volet étant délimitées sensiblement par le diamètre du volet bissecteur de l'angle α.

Chaque partie 22A,22B du volet comporte un charnon mobile 24,26, venu de matière avec cette partie, articulé autour d'une broche 28,30 d'axes X,Y portée par des supports 32 à 42 solidaires de la face interne de l'extrémité 12 du conduit de remplissage ou de l'organe évasé 18.

Le volet 22 est sollicité vers sa position d'obturation par une épingle élastique 44 en forme générale de U, les branches 44A,44B de l'épingle coopérant respectivement avec les deux parties 22A,22B du volet et étant enroulées sur les broches d'articulation 28,30.

Lorsque le volet 22 est en position d'obturation, comme cela est représenté aux figures 1 et 2, les deux parties 22A,22B de ce volet sont jointives.

Lorsque l'on introduit le bec 14 du pistolet dans le collet 18, on pousse le volet 22 vers sa position ouverte, comme cela est représenté à la figure 3, à l'encontre de la force élastique de rappel de l'épingle 44. Du fait de l'angle α formé par les axes d'articulation des deux parties 22A,22B du volet, celles-ci s'écartent l'une de l'autre en laissant un espace libre entre elles, de manière à dégager la partie inférieure du bec 14 et l'orifice 16 de détection d'un trop-plein de carburant qui débouche sensiblement entre les deux parties 22A,22B.

L'invention ne se limite pas au mode de réalisation représenté sur les figures.

En particulier, l'invention peut s'appliquer à un agencement pour le remplissage d'un réservoir de carburant ne comportant pas de collet de calibration du pistolet de distribution de carburant. Dans ce cas, l'extrémité débouchante du conduit de remplissage du réservoir délimite l'ouverture d'introduction du bec du pistolet et le volet en deux parties obture directement l'extrémité débouchante du conduit.

L'invention comporte de nombreux avantages.

En particulier, le volet en deux parties de l'agencement selon l'invention peut être ouvert en étant poussé par le bec du pistolet de distribution de carburant, sans risque d'obturation de l'orifice de détection d'un trop-plein de carburant.

## Revendications

1. Agencement pour le remplissage d'un réservoir de carburant de véhicule automobile, du type comprenant un conduit de remplissage du réservoir muni d'un extrémité (12) délimitant une ouverture (20) d'introduction d'un bec (14) de pistolet de distribution de carburant comportant dans sa partie inférieure un orifice (16) de détection d'un trop-plein de carburant, et un volet (22) d'obturation de l'ouverture d'introduction (20) articulé dans sa partie inférieure en étant sollicité élastiquement vers sa position d'obturation, caractérisé en ce que le volet (22) comporte deux parties (22A,22B) articulées respectivement autour de deux axes (X,Y) coplanaires, sensiblement transversaux par rapport à l'extrémité du conduit, formant un angle (α) entre eux, de manière qu'en position d'obturation du volet, les deux parties (22A, 22B) de celui-ci soient jointives, et qu'en position ouverte du volet, les parties (22A,22B) de celui-ci soient écartées l'une de l'autre pour dégager l'orifice (16) de détection d'un trop-plein de carburant.

2. Agencement selon la revendication 1, caractérisé en ce que l'ouverture (20) d'introduction du bec de pistolet est délimitée par un collet de calibration (18) empêchant l'introduction d'un bec de pistolet de diamètre supérieur à celui du collet.

3. Agencement selon la revendication 1 ou 2, caractérisé en ce que le volet (22) est sollicité vers sa position d'obturation par une épingle élastique (44) en forme générale de U, les deux branches (44A,44B) de l'épingle coopérant respectivement avec les deux parties (22A,22B) du volet et étant enroulées autour de broches (28,30) d'articulation de ces parties.

4. Agencement selon l'une quelconque des revendications précédentes, caractérisé en ce que le volet (22) a une forme générale circulaire lorsqu'il est en position d'obturation, les deux parties (22A,22B) du volet étant délimitées sensiblement par le diamètre du volet bissecteur de l'angle (α) formé par les axes (X,Y) d'articulation de ces parties.

## Claims

1. An arrangement for filling a motor vehicle fuel tank of the type comprising a duct for filling the tank provided with an end (12) bounding an opening (20) for inserting a fuel delivery gun nozzle (14) comprising in its lower section a port (16) for detecting fuel over-flow, and a valve (22) for closing the insertion opening (20), which valve is articulated in its lower part by being resiliently acted upon in the direction of its closed position, characterised in that the valve (22) comprises two sections (22A, 22B) respectively articulated about two coplanar axes (X, Y) which are substantially transversal in relation to the end of the duct and form an angle (α) therebetween, in such a manner that when the valve is closed, the two sections (22A, 22B) of the said valve abut, and when the valve is open, the sections (22A, 22B) of the valve are separated from each other to open the port (16) for detecting fuel over-flow.

2. An arrangement according to Claim 1, characterised in that the opening (20) for inserting the nozzle of the gun is bounded by a calibration collar (18) preventing the insertion of a gun nozzle larger in diameter than the diameter of the collar.

3. An arrangement according to Claim 1 or 2, characterised in that the valve (22) is acted upon in the direction of its closed position by a generally U-shaped resilient pin (44), the two branches (44A, 44B) of the pin cooperating respectively with the two sections (22A, 22B) of the valve and being wound around spindles (28, 30) for articulating these sections.

4. An arrangement according to any one of the preceding claims, characterised in that the valve (22) has a generally round shape when it is closed, since the two sections (22A, 22B) of the valve are substantially bounded by the diameter of the valve, which diameter bisects the angle (α) formed by the axes (X, Y) for articulating these sections.

## Patentansprüche

1. Anordnung zum Betanken eines Kraftstoffbehälters eines Fahrzeuges, des Typs, der eine Tankleitung für den Behälter, die mit einem Ende (12) versehen ist, welche eine Öffnung (20) zum Einführen eines Hahnes (14) der Kraftstoff-Zapfpistole begrenzt, welcher in seinem unteren Teil eine Öffnung (16) zum Erfassen eines Überlaufes an Kraftstoff umfaßt, und eine Verschlußklappe (16) für die Einführöffnung (20) aufweist, die in ihrem unteren Teil angelenkt ist, wobei sie elastisch in die Verschlußposition vorbelastet ist, dadurch gekennzeichnet, daß die Verschlußklappe (22) zwei Teile (22A, 22B) aufweist, die jeweils um zwei koplanare Achsen (X, Y) angelenkt sind, die im wesentlichen quer in bezug auf das Ende der Leitung liegen, wobei sie einen Winkel (α) zwischen sich bilden, derart, daß in der Verschlußposition der Verschlußklappe die beiden Teile (22A, 22B) derselben nebeneinander liegen, und daß in Offenstellung der Verschlußklappe die Teile (22A, 22B) derselben voneinander entfernt sind, um die Öffnung (16) für die Erfassung eines Überlaufs des Kraftstoffes freizulegen.

2. Anordnung nach Anspruch 1, dadurch gekennzeichnet, daß die Einführöffnung (20) für den Hahn der Zapfpistole durch einen Kalibrierkragen (18) begrenzt ist, der das Einführen eines Zapfhahnes mit einem Durchmesser größer als dem des Kragens verhindert.

3. Anordnung nach Anspruch 1 oder 2, dadurch gekennzeichnet, daß die Verschlußklappe (22) in ihre Verschlußposition durch eine elastische Nadel (44) in allgemeiner Form eines U vorbelastet ist, wobei die beiden Beine (44A, 44B) der Nadel jeweils mit den beiden Teilen (22A, 22B) der Verschlußklappe zusammenwirken und um Schwenkwellen (28, 30) dieser Teile gelegt sind.

4. Anordnung nach einem der vorangehenden Ansprüche, dadurch gekennzeichnet, daß die Verschlußklappe (22) eine allgemein kreisförmige Form hat, wenn sie in der Verschlußposition ist, wobei die beiden Teile (22A, 22B) der Verschlußklappe im wesentlichen durch den Durchmesser der Verschlußklappe begrenzt sind, der durch den Winkel (α) halbiert ist, welcher durch die Schwenkachsen (X, Y) dieser Teile gebildet ist.
